# EUROPEAN PATENT APPLICATION

(11) **EP 2 669 201 A2**
(43) Date of publication of application: **04.12.2013**
(21) Application number: 13169383.0
(22) Date of filing: 27.05.2013
(51) Int. Cl.: B65B 35/22, B65B 41/16, B65B 43/26, B65B 51/14, B65B 51/30, B65B 61/28, B65B 5/04, B65B 9/02, B65B 31/06

(54) **Automatic packaging device**

(30) Priority: 29.05.2012 JP 2012122536
(71) Applicant: Fujifilm Corporation, Minato-ku Tokyo (JP)
(72) Inventor: Takata, Kenji, Ashigarakami-gun, Kanagawa (JP)
(74) Representative: Höhfeld, Jochen

(57) **Abstract**

An automatic packaging device (10) includes a casing (14), a wrapping mechanism and a conveyance mechanism. An insertion portion (12) is provided in the casing (14). The wrapping mechanism is provided inside the casing (14) and wraps a radiation image capture device (18) inserted through the insertion portion (12) in a cover material (6). The conveyance mechanism automatically conveys the radiation image capture device (18 that has been wrapped in the cover material (16) by the wrapping to an ejection portion (26). The automatic packaging device automatically wraps the radiation image capture device (18) in the cover material (16).

## Description

### BACKGROUND OF THE INVENTION

### Field of the Invention

The present invention relates to an automatic packaging device for a radiation image capture device.

### Description of the Related Art

Radiation image capture devices that form radiation images are widely used in medical facilities nowadays. Accordingly, for objectives such as improving image quality of the radiation images captured by the radiation image capture devices and improving user-friendliness for imaging subjects, medical staff and the like, development is progressing in technologies for reducing thickness and weight and for characteristics such as load bearing, impact resistance, vibration resistance, heat resistance and the like (for example, see Japanese Patent Application Laid-Open (JP-A) No. 2002-131437).

As is recited in JP-A No. 2002-131437, many electronic components are provided inside a radiation image capture device, such as an X-ray detector including photoelectric conversion elements, a circuit board that processes electronic signals from the photoelectric conversion elements, and so forth. Therefore, preventing ingressions of blood and vomit from imaging subjects and the like and preventing damage to surfaces of the body of a radiation image capture device are necessary for preventing the transmission of infections in hospitals and maintaining the quality of captured images.

However, JP-ANo. 2002-131437 gives no consideration at all to these requirements. Consequently, medical facilities must take separate measures by methods such as simple wrapping of radiation image capture devices in vinyl and suchlike.

These separate measures impose an excessive burden on medical staff. Moreover, unsatisfactory results may be obtained when a method of packaging is inadequate.

### SUMMARY OF THE INVENTION

In consideration of the situation described above, an object of the present invention is to provide an automatic packaging device that automatically wraps a radiation image capture device in a cover material.

An automatic packaging device in accordance with a first aspect of the present invention includes: a casing provided with an insertion portion and ejection portion for a radiation image capture device; a wrapping mechanism (wrapping means) disposed inside the casing, the wrapping mechanism wrapping a radiation image capture device inserted through the insertion portion in a cover material; and a conveyance mechanism (conveyance means) that conveys the radiation image capture device that has been wrapped in the cover material by the wrapping mechanism to the ejection portion and enables ejection of the radiation image capture device from the casing.

According to the first aspect of the present invention, when the radiation image capture device is inserted through the insertion portion provided in the casing of the automatic packaging device, the radiation image capture device is wrapped in the cover material by the wrapping mechanism. After the wrapping by the wrapping mechanism, the radiation image capture device is conveyed to the ejection portion by the conveyance mechanism.

Thus, the radiation image capture device may be automatically wrapped in the cover material. Then, the conveyance mechanism may automatically convey the radiation image capture device to the ejection portion.

Hence, contamination of the radiation image capture device with blood or vomit from an imaging subject or the like may be prevented, and scratching of the surfaces of the radiation image capture device and suchlike may be prevented.

In a second aspect of the invention, in the automatic packaging device according to the first aspect, the cover material includes a sheet fabricated of resin that is stored respectively in storage portions at both sides of a movement path of the radiation image capture device inserted through the insertion portion, two distal end portions of the sheet that are drawn out from the storage portions being connected, the wrapping mechanism includes: guide portions (guide means) that are disposed at the both sides of the movement path and that cause the sheet to oppose two side faces of the radiation image capture device while the sheet is being drawn out by a leading end of the radiation image capture device moving; a fusion portion (fusion means) that fuses portions of the sheet at the both sides to one another at a periphery of the radiation image capture device; and a cutting portion (cutting means) that cuts the sheet between a portion of the sheet in which the radiation image capture device has been packaged and the storage portions, and the conveyance mechanism includes an operation portion (operation means) that conveys the radiation image capture device to the ejection portion after the cutting portion has cut the sheet.

According to the second aspect of the invention, the radiation image capture device is conveyed to a predetermined position by the guide portions provided at the wrapping mechanism. During the conveyance, the sheet is caused to oppose each of the two side faces of the radiation image capture device while the leading end of the radiation image capture device draws the sheet out into the movement path. Then, the doubled-up sheet is fused to itself around the periphery of the radiation image capture device by the fusion portion. Thereafter, the sheet is cut by the cutting portion, between the sheet that is packaging the radiation image capture device and the storage portions. After the sheet has been cut by the cutting portion, the radiation image capture device is conveyed to the ejection portion by the operation portion.

Thus, a radiation image capture device may be automatically wrapped in a cover material, and the radiation image capture device wrapped in the cover material may be automatically conveyed to the ejection portion.

In a third aspect of the invention, in the automatic packaging device according to the second aspect, the fusion portion fuses the sheet at one of a single location in a movement direction of the radiation image capture device or two locations separated by a predetermined spacing in the movement direction, if the sheet is fused at the two locations, the cutting portion cuts the sheet between the two fused locations, and if the sheet is fused at the single location, the cutting portion cuts a movement direction intermediate portion of the fused location.

According to the third aspect of the invention, fusing is applied by the fusion portion at two locations separated by a predetermined spacing in the movement direction of the radiation image capture device, or at a single location.
After the fusing, in a case of fusing at two locations, the sheet is cut by the cutting portion between the two fused portions. In a case of fusing at one location, the sheet is cut by the cutting portion at an up-and-down direction intermediate portion of the fused portion.

Thus, the radiation image capture device may be hermetically sealed in the sheet by the fusion portion.

In a fourth aspect of the invention, in the automatic packaging device according to the first aspect, the cover material is a bag that is disposed inside the casing and formed of a sheet fabricated of resin, the bag including an aperture portion, the wrapping mechanism includes a guide portion (guide means) that inserts the radiation image capture device into the bag under gravity, and the conveyance mechanism includes an opening portion that opens the ejection portion for the radiation image capture device after the radiation image capture device has been inserted into the bag.

According to the fourth aspect of the invention, the sheet fabricated of resin that is formed as a bag body with an aperture portion is disposed in the interior of the casing of the automatic packaging device. A radiation image capture device is inserted into the interior of the bag under gravity by the guide portion. After the radiation image capture device has been inserted into the bag, the ejection portion of the radiation image capture device is opened by the opening portion.

Thus, a radiation image capture device may be automatically wrapped in a cover material.

In a fifth aspect of the invention, in the automatic packaging device according to the fourth aspect, the wrapping mechanism includes a fusion portion that fuses the aperture portion of the bag after the radiation image capture device has been inserted into the bag, and the opening portion opens the ejection portion for the radiation image capture device after the fusion portion has fused the aperture portion of the bag.

According to the fifth aspect of the invention, after the radiation image capture device has been inserted into the bag, the aperture portion of the bag is fused by the fusion portion. Thereafter, the ejection portion of the radiation image capture device is opened by the opening portion.

Thus, a radiation image capture device may be hermetically sealed at the fused portion of the sheet, and the sealed radiation image capture device may be ejected.

In a sixth aspect of the invention, the automatic packaging device according to the third or fifth aspect is provided with a suction portion (suction means) inside the casing that sucks air from inside the sheet packaging the radiation image capture device before the radiation image capture device is hermetically sealed by the fusion portion.

Thus, integration of the sheet with the radiation image capture device may be enhanced, and handling characteristics of the radiation image capture device that has been wrapped in the sheet may be improved.

In a seventh aspect of the invention, the automatic packaging device according to any of the first to sixth aspects is provided with: in the casing, a feed portion through which a radiation image capture device wrapped in the cover material is inserted; a guide portion (guide means) that lowers the radiation image capture device fed through the feed portion to a reception portion using gravity; an uncovering portion (uncovering means) that breaks the cover material of the radiation image capture device placed on the reception portion and uncovers the radiation image capture device; and a raising portion (rasing means) that lifts the reception portion and conveys the radiation image capture device that has been uncovered from the cover material to the feed portion.

According to the invention of the seventh aspect, when the radiation image capture device wrapped in the cover material is fed in through the feed portion, the radiation image capture device that has been fed through the feed portion is lowered to the reception portion under gravity by the guide portion. Thereafter, the cover material of the radiation image capture device placed on the reception portion is cut by the uncovering portion. Thus, the radiation image capture device is uncovered. Then, the reception portion is lifted up by the raising portion, and the radiation image capture device uncovered from the cover material is conveyed to the feed portion.

Thus, the radiation image capture device wrapped in the cover material may be uncovered from the cover material, and the uncovered radiation image capture device may be ejected.

In an eighth aspect of the invention, in the automatic packaging device according to the seventh aspect, the uncovering portion cuts the sheet along an edge of the radiation image capture device.

Thus, the sheet is cut along the radiation image capture device, and the radiation image capture device is uncovered.

In a ninth aspect of the invention, in the automatic packaging device according to the seventh aspect, the wrapping mechanism hermetically seals the cover material and provides a weakened portion at least at a portion of an outer side of the cover material, and the uncovering portion breaks the weakened portion and ruptures the cover material.

According to the invention of the ninth aspect, the cover material, which has been subjected to MAGIC CUT (trademark) processing, i.e., easy opening processing, can be cut by the uncovering portion. Thus, the radiation image capture device may be uncovered from the cover material.

In a tenth aspect of the invention, the automatic packaging device according to any of the first to sixth aspects is provided with, at the insertion portion, a sterilizing treatment unit (sterilizing treatment means) that applies a sterilizing treatment to surfaces of the radiation image capture device.

Thus, the surface of a radiation image capture device may be sterilized before the radiation image capture device is wrapped in the cover material.

In an eleventh aspect of the invention, the automatic packaging device according to any of the first to sixth and tenth aspects is provided with, at the insertion portion, a cleaning unit (cleaning means) that applies a cleaning treatment to surfaces of the radiation image capture device.

Thus, the surface of the radiation image capture device may be cleaned before the radiation image capture device is wrapped in the cover material.

In a twelfth aspect of the invention, in the automatic packaging device according to any of the first to sixth, tenth and eleventh aspects, a sterilizing treatment is applied to a surface of the cover material.

Thus, the surface of the cover material wrapping the radiation image capture device may be kept clean.

In a thirteenth aspect of the invention, in the automatic packaging device according to any of the first to sixth and tenth to twelfth aspects, an antistatic treatment is applied to a surface of the cover material.

Thus, electrostatic charging of the radiation image capture device may be prevented.

In a fourteenth aspect of the invention, in the automatic packaging device according to any of the first to sixth and tenth to thirteenth aspects, at least one of a slip prevention treatment or slip prevention machining that prevents slippage is applied to a surface of the cover material.

Thus, slippage of the radiation image capture device during transportation or during use or the like may be prevented.

In a fifteenth aspect of the invention, in the automatic packaging device according to any of the first to sixth and tenth to fourteenth aspects, the cover material is formed of a material that allows transmission of communication waves from the radiation image capture device.

Thus, the communication functions of a radiation image capture device with wireless communication functions may be properly maintained.

In a sixteenth aspect of the invention, the automatic packaging device according to any of the first to fifteenth aspects is provided with a mounting portion at an upper portion of the casing, at which mounting portion one of an image reading device that reads an image from a CR cassette or an automatic developer that develops a film of a film-type cassette is to be mounted.

Thus, the mounting portion provided in the automatic packaging device may be provided to serve as a location for disposition of an image acquisition device, an automatic developing machine or the like.

When configured as in the structures described above, the present invention may provide an automatic packaging device that automatically wraps a radiation image capture device in a cover material.

### BRIEF DESCRIPTION OF THE DRAWINGS

Fig. 1A is a perspective diagram showing basic structures of an automatic packaging device in accordance with a first exemplary embodiment of the present invention.
Fig. 1B is a perspective diagram of a cassette that has been wrapped by the automatic packaging device in accordance with the first exemplary embodiment of the present invention.
Fig. 2A, Fig. 2B and Fig. 2C are partial sectional diagrams illustrating a wrapping procedure in the automatic packaging device in accordance with the first exemplary embodiment of the present invention.
Fig. 3A and Fig. 3B are partial sectional diagrams illustrating the wrapping procedure in the automatic packaging device in accordance with the first exemplary embodiment of the present invention.
Fig. 4A and Fig. 4B are partial sectional diagrams showing cutting positions in the automatic packaging device in accordance with the first exemplary embodiment of the present invention.
Fig. 4C is a schematic diagram showing ejection of a cassette from the automatic packaging device in accordance with the first exemplary embodiment of the present invention, as one example thereof.
Fig. 5 is a block diagram showing basic structures of a controller of the automatic packaging device in accordance with the first exemplary embodiment of the present invention.
Fig. 6 is a flowchart illustrating the wrapping procedure of the automatic packaging device in accordance with the first exemplary embodiment of the present invention.
Fig. 7A is a perspective diagram showing basic structures of an automatic packaging device in accordance with a second exemplary embodiment of the present invention.
Fig. 7B is a perspective diagram of a cassette that has been wrapped by the automatic packaging device in accordance with the second exemplary embodiment of the present invention.
Fig. 8A and Fig. 8B are partial sectional diagrams illustrating a wrapping procedure in the automatic packaging device in accordance with the second exemplary embodiment of the present invention.
Fig. 9A and Fig. 9B are partial sectional diagrams showing cutting positions in the automatic packaging device in accordance with the second exemplary embodiment of the present invention.
Fig. 10A, Fig. 10B, Fig. 10C and Fig. 10D are schematic diagrams for describing a procedure for extracting air in an automatic packaging device in accordance with a third exemplary embodiment of the present invention.
Fig. 11 is a perspective diagram showing basic structures of an automatic packaging device in accordance with a fourth exemplary embodiment of the present invention.
Fig. 12A, Fig. 12B and Fig. 12C are partial sectional diagrams illustrating a cover removal procedure in the automatic packaging device in accordance with the fourth exemplary embodiment of the present invention.
Fig. 13A is a partial sectional diagram showing basic structures of an automatic packaging device in accordance with a fifth exemplary embodiment of the present invention.
Fig. 13B and Fig. 13C are partial sectional diagrams showing basic structures of an automatic packaging device in accordance with a sixth exemplary embodiment of the present invention.
Fig. 14A and Fig. 14B are partial enlarged diagrams illustrating a cover removal procedure in an automatic packaging device in accordance with a seventh exemplary embodiment of the present invention.
Fig. 14C, Fig. 14D and Fig. 14E are partial enlarged diagrams illustrating variant examples of the seventh exemplary embodiment of the present invention.
Fig. 15A, Fig. 15B, Fig. 15C and Fig. 15D are partial sectional diagrams illustrating a wrapping procedure in an automatic packaging device in accordance with an eighth exemplary embodiment of the present invention.
Fig. 16A, Fig. 16B, Fig. 16C and Fig. 16D are partial sectional diagrams illustrating a wrapping procedure in an automatic packaging device in accordance with a ninth exemplary embodiment of the present invention.
Fig. 17 is an exterior perspective view showing basic structures of an automatic packaging device in accordance with a tenth exemplary embodiment of the present invention.

### DETAILED DESCRIPTION OF THE INVENTION

### - First Exemplary Embodiment -

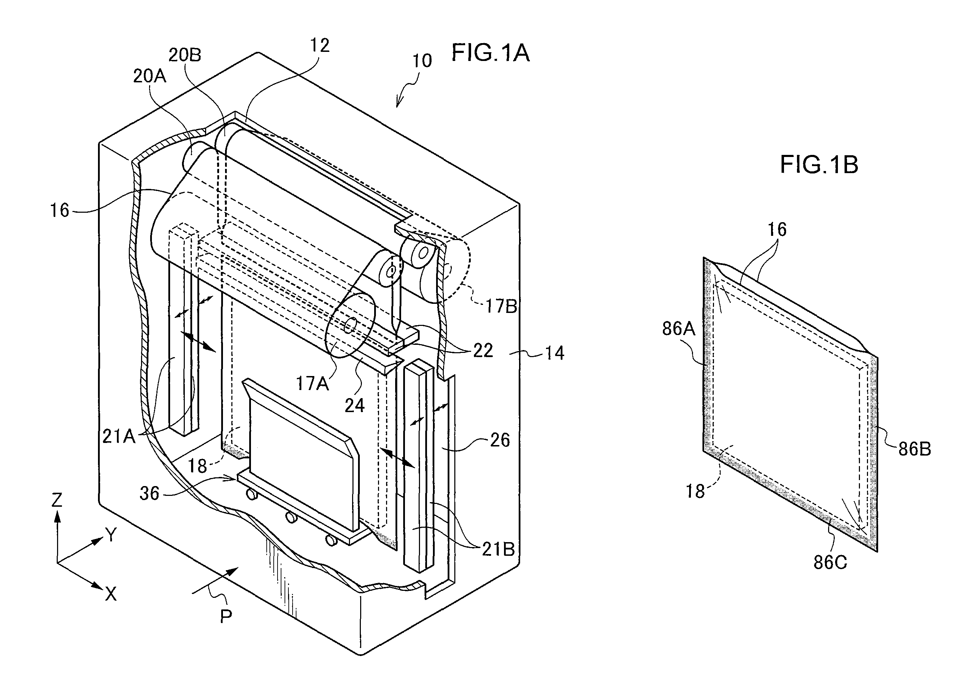

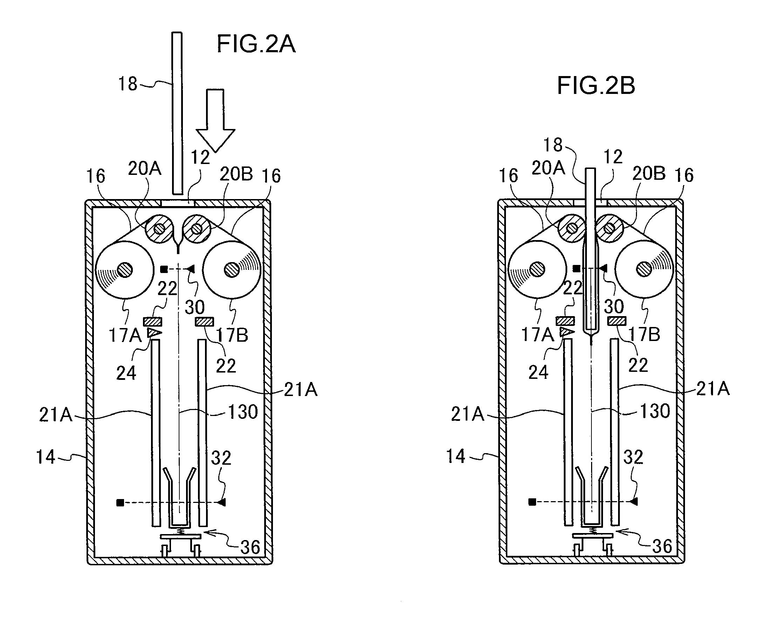

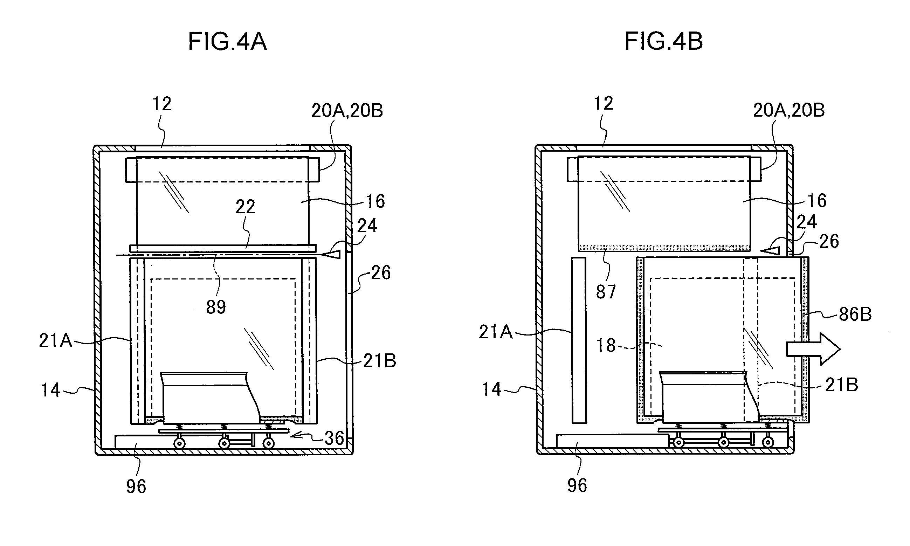

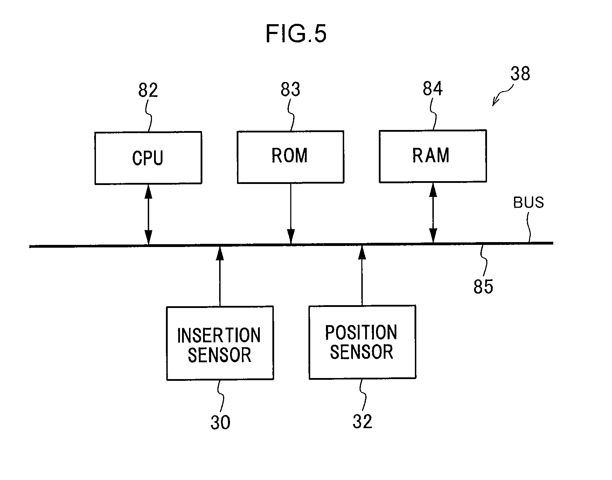

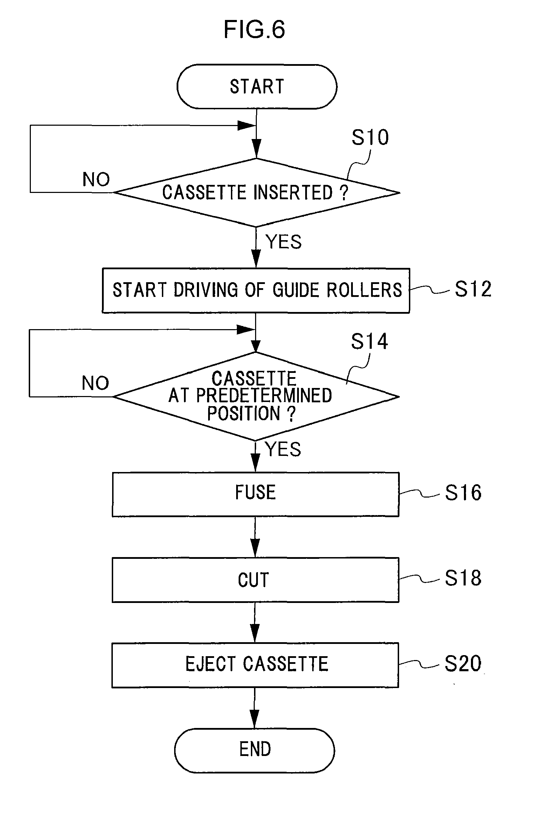

A first exemplary embodiment of the present invention is described using Fig. 1A to Fig. 6. Fig. 1A and Fig. 1B are exterior perspective diagrams of an automatic packaging device 10 in accordance with the present invention. Fig. 2A to Fig. 3B are partial sectional diagrams illustrating an automatic packaging procedure. Fig. 4A and Fig. 4B are partial sectional diagrams showing cut portions. Fig. 5 is a block diagram of a control device, and Fig. 6 is a flowchart showing a processing sequence.

As shown in Fig. 1A, the automatic packaging device 10 according to the first exemplary embodiment includes a casing 14, at an upper portion of which an insertion portion 12 is provided. A radiation image capture device (hereinafter referred to as a "cassette") 18 is inserted into the insertion portion 12. Inside the casing 14, the cassette 18 is automatically wrapped in a cover material (hereinafter referred to as a "sheet") 16. Fig. 1B shows the cassette 18 that has been wrapped in the sheet 16.

The cassette 18 is formed in a rectangular plate shape. The cassette 18 detects radiation that has passed through an imaging subject and forms a radiation image. In the present specification, the meaning of the term "the cassette 18" includes any of the different systems of recording detected radiation: computed radiography (CR) cassettes; digital radiography (DR) cassettes; and "conventional" (film-type) cassettes.

An ejection portion 26, through which the packaged cassette 18 is ejected, is opened in a side face of the casing 14. A pair of sheet rolls 17A and 17B (storage portions) are provided inside the casing 14 below the insertion portion 12. The sheet 16 is unwindably wound onto each of the sheet rolls 17A and 17B.

The sheet rolls 17A and 17B are disposed to oppose one another, one at each side of a movement path of the cassette 18. Two end portions of the sheet 16 are stored at the sheet rolls 17A and 17B to be unwindable. A central portion of the sheet 16 is disposed at a position traversing the insertion portion 12 (see Fig. 2A).

For the sheet rolls 17A and 17B, a mode in which the sheet 16 is wound onto both sides substantially equally is described, but this is not limiting. Structures are possible in which the sheet 16 is wound only onto one of the sheet rolls 17A and 17B provided at one side and a loading mechanism that unwinds the sheet 16 is provided at the other side.

It is sufficient that the sheet 16 be a sheet fabricated of resin that can be fused by heat; for example, a vinyl sheet, a polyethylene sheet or the like.

A pair of guide rollers 20A and 20B are disposed to oppose one another in the vicinity of the insertion portion 12. The guide rollers 20A and 20B are rotatably mounted at both sides of the insertion portion 12, nip the cassette 18 that is inserted into the insertion portion 12 from both sides thereof and, while the cassette 18 is being lowered under gravity, guide the cassette 18 to a fusion position at which a reception stand 36 is provided.

The reception stand 36 includes a retention stand 114, a compression coil spring 115 and a trolley 116. The retention stand 114 supports the cassette 18 inside the casing 14 so as not to tip over. The compression coil spring 115 absorbs an impact if the cassette 18 happens to drop. The trolley 116 conveys the cassette 18. The trolley is a wheeled structure herein, but may be a sliding structure using rails or the like. A solenoid that causes the reception stand 36 to move is disposed adjacent to the reception stand 36.

First fusing heaters 21A and 21B are provided inside the casing 14, below the sheet rolls 17A and 17B. The first fusing heaters 21A and 21B are disposed in a direction orthogonal to an axial direction of the sheet rolls 17A and 17B. The first fusing heaters 21A and 21B are disposed at two end portions of the casing 14. In a coordinate system in which the direction toward the insertion portion 12 is the Z direction, viewed in the direction of arrow P (the Y direction), the fusing heaters 21A and 21B are movable in a lateral direction (the X direction). The first fusing heaters 21A and 21B are also movable in a depth direction (the Y direction). The first fusing heaters 21A and 21B are respectively provided as pairs sandwiching the ejection portion 26. The first fusing heaters 21A and 21B are moved in the Y direction to nip the sheet 16 from both sides thereof, and fuse the sheet 16.

Second fusing heaters 22 are provided below the sheet rolls 17A and 17B. The second fusing heaters 22 are disposed in the direction parallel to the axial direction of the sheet rolls 17A and 17B. The second fusing heaters 22 are disposed in the upper portion of the casing 14, and are movable in the vertical direction (the Z direction). The second fusing heaters 22 are also provided as a pair sandwiching the ejection portion 26. The second fusing heaters 22 are moved in the Y direction to nip the sheet 16 from both sides thereof, and fuse the sheet 16.

Thus, when not being used, the first fusing heaters 21A and 21B and the second fusing heaters 22 may be moved away from the cassette 18 so as not to be obstructions, and when being used, the first fusing heaters 21A and 21B and second fusing heaters 22 may be disposed at predetermined fusing positions. Consequently, even if cassettes 18 with different external dimensions are to be inserted, the positions of the fusing heaters 21A, 21B and 22 may be adjusted to be adapted in accordance with the respective external dimensions.

A cutter 24 is provided below the second fusing heaters 22, in parallel with the second fusing heaters 22. The cutter 24 cuts the sheet 16. The cutter 24 too is movable in the up-and-down direction (the Z direction).

A control device (controller) 38 shown in the block diagram of Fig. 5 is provided inside the casing 14 of the automatic packaging device 10. The controller 38 is provided with a CPU 82 that executes a pre-defined processing program, and a ROM 83 and RAM 84 that serve as recording media. The controller 38 controls the automatic packaging device 10.

The CPU 82, ROM 83 and RAM 84 are connected by a bus line 85, and are connected with an insertion sensor 30 that detects the insertion of the cassette 18 and a position sensor 32 that detects positions of the cassette 18. The processing program is memorized in the recording medium of the ROM 83.

It is desirable if a sterilizing treatment is applied to surfaces of the sheet 16. Thus, the surfaces of the sheet 16 may be kept clean. An antistatic treatment too may be applied to the surfaces of the sheet 16. Thus, electrostatic charging when the cassette 18 has been wrapped in the sheet 16 is prevented.

It is also desirable if a slip prevention treatment or slip prevention machining that prevents slipping, for example, dimpling or the like, is applied to a surface of the sheet 16. Hence, transportation of the cassette 18 is easier. Furthermore, in a case in which the cassette 18 is of a wireless communications type, it is desirable to form the sheet 16 of a material that is unlikely to block communication waves from the cassette 18 (for example, a vinyl sheet, a polyethylene sheet or the like).

Next, the procedure of wrapping the cassette 18 is described using the flowchart in Fig. 6, and Fig. 2A to Fig. 4C.

First, an operation start button of the automatic packaging device 10 (not shown in the drawings) is pressed to start operations. When operation starts, the processing program is started, and detection for the cassette 18 by the insertion sensor 30 is commenced. The CPU 82 waits until the cassette 18 is detected (step S10 in Fig. 6, and see Fig. 2A), and when the cassette 18 is detected proceeds to step S12.

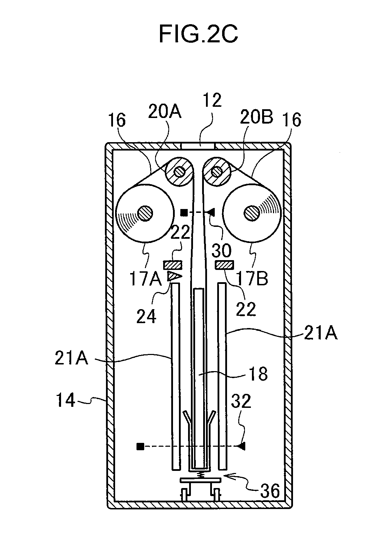

In step S 12, the guide rollers 20A and 20B are rotated. The guide rollers 20A and 20B nip the faces at both sides of the cassette 18 from the outer sides thereof and, utilizing the weight of the cassette 18, allow the cassette 18 to steadily descend to a predetermined position at which a bottom face of the cassette 18 abuts against the reception stand 36. During the descent, the cassette 18 descends in a state in which a leading end face thereof is abutting against the sheet 16. Thus, the cassette 18 causes the sheet 16 to unwind from the sheet rolls 17A and 17B, and the sheet 16 opposes the two side faces of the cassette 18 (step S12 in Fig. 6, and see Fig. 2B and Fig. 2C).

Then, after the position sensor 32 detects that the cassette 18 has descended to the predetermined position, the first fusing heaters 21A and 21B and second fusing heaters 22 move to pre-specified fusing positions. That is, the fusing heaters 21A, 21B and 22 are moved to two edge portions and an upper portion of the cassette 18.

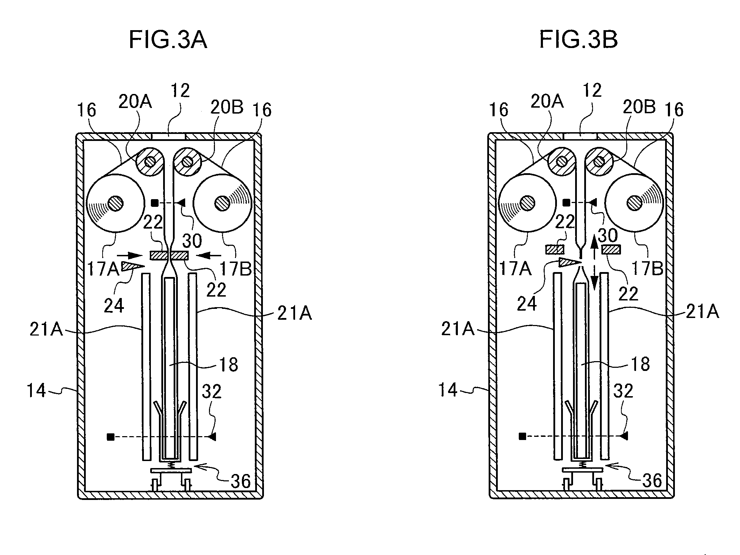

Hence, the fusing heaters 21A, 21B and 22 nip portions of the sheet 16 protruding beyond the two side faces of the cassette 18 to outside the cassette 18, from both sides thereof, and fuse the sheet 16. Thus, fused portions 86A, 86B and 87 are formed in the sheet 16 (step S 14 and step S16 in Fig. 6, and see Fig. 3A, Fig. 4A and Fig. 4B). A portion that was fused by a fusing operation of a previous cassette is a fused portion 86C.

When the fusion by the first fusing heaters 21A and 21B and the second fusing heaters 22 is complete, the cutter 24 is moved to below the fused portion 87, which is between the guide rollers 20A and 20B and the cassette 18, and cuts the sheet 16 along the cassette 18 at a cut portion 89 between the fused portion 87 and the cassette 18 (step S 18 in Fig. 6, and see Fig. 3E and Fig. 4A).

Finally, after the sheet 16 has been cut, a solenoid 96 pushes the reception stand 36, and the cassette 18 wrapped in the sheet 16 is pushed out, riding on the reception stand 36, to the ejection portion (step S20 in Fig. 6, and see Fig. 4B).

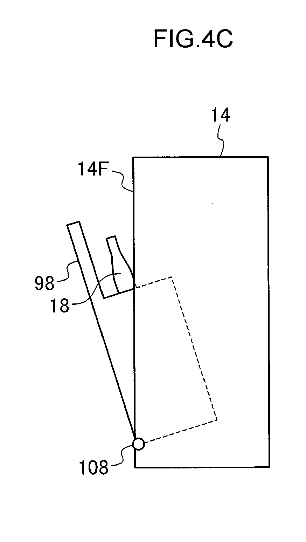

As shown in Fig. 4C, an ejection door 98 is provided at a front face side 14F of the casing 14. A turning support portion 108 of the door 98 is turned by a motor, which is not shown in the drawings, and the cassette 18 may be ejected through an aperture portion between the door 98 and the front face side 14F of the casing 14.

According to the present exemplary embodiment, the cassette 18 may be automatically wrapped in the sheet 16 by the automatic packaging device 10, and the cassette 18 wrapped in the sheet 16 may be ejected. Hence, contamination of the cassette 18 by blood or vomit from an injured imaging subject or the like may be prevented by the sheet 16, and damage to the surfaces of the cassette 18 may be prevented by the sheet 16.

The sheet 16 wrapping the cassette 18 is of a disposable type that is replaced with a new sheet after each use. Therefore, the cassette 18 may be kept clean at all times. This is a significant contribution to preventing the transmission of infections in hospitals, maintaining the image quality of captured images and the like.

### - Second Exemplary Embodiment -

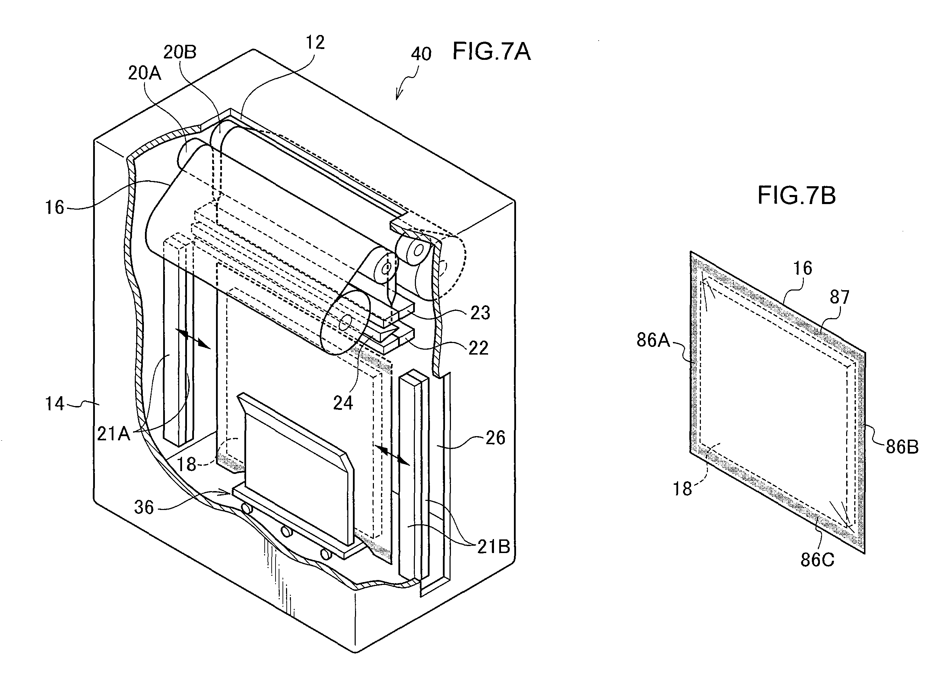

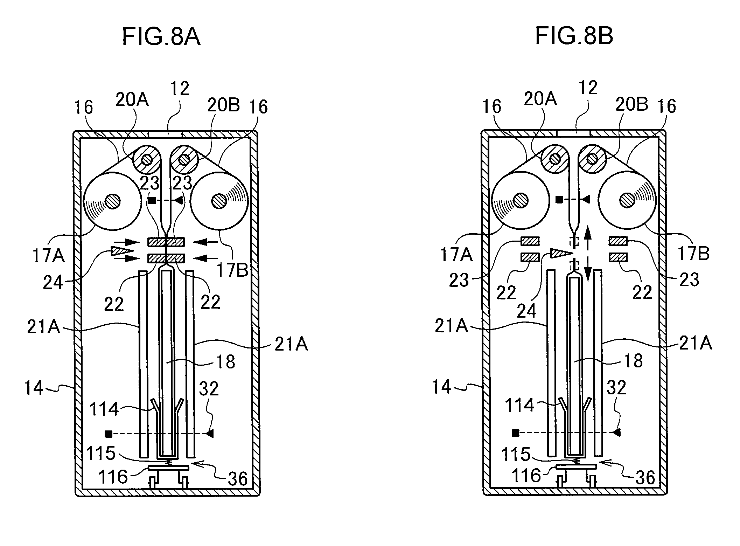

As shown in Fig. 7A to Fig. 8B, an automatic packaging device 40 in accordance with a second exemplary embodiment is provided with third fusing heaters 23, which are separated upward from the second fusing heaters 22 by a predetermined spacing. The provision of the third fusing heaters 23 is a difference from the automatic packaging device 10 according to the first exemplary embodiment. This difference is the focus of description.

Inside the casing 14, the guide rollers 20A and 20B are provided, and the second fusing heaters 22 and third fusing heaters 23 separated by the predetermined spacing in the up-and-down direction are disposed between the guide rollers 20A and 20B and the cassette 18.

The cutter 24 for cutting is disposed between the fusing heaters 22 and 23.

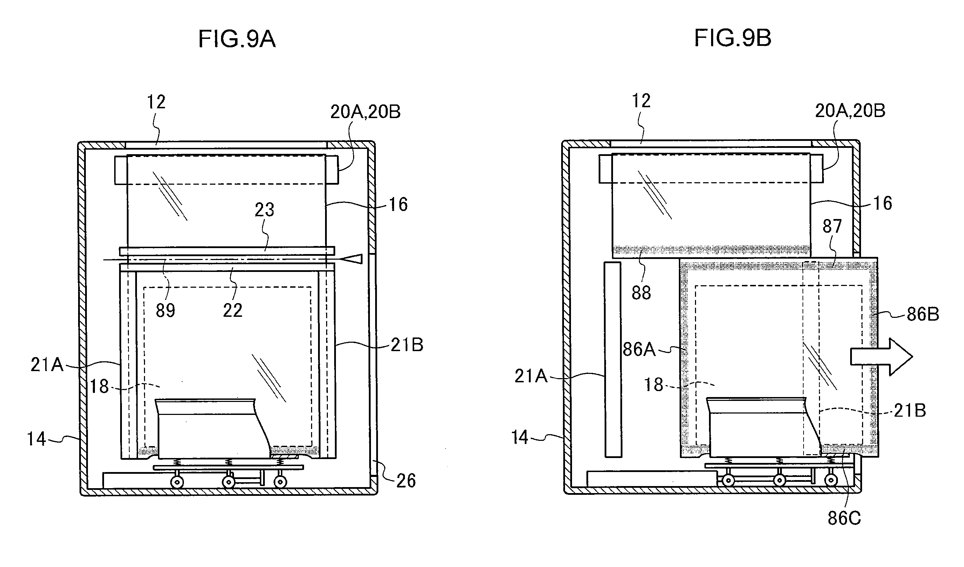

Thus, as shown in Fig. 9A and Fig. 9B, the fused portion 87 is formed in the sheet 16 by the second fusing heaters 22, and a fused portion 88 is formed by the third fusing heaters 23. The fused portion 87 and the fused portion 88 are separated by a predetermined dimension in a movement direction of the sheet 16. The sheet 16 is cut by the cutter 24 at the cut portion 89 between the fused portion 87 and the fused portion 88.

Thus, as shown in Fig. 9B, the cassette 18 may be ejected in a state in which the upper portion thereof is sealed by the fused portion 87. Because the whole of the periphery of the cassette 18 is hermetically sealed, sealing performance may be further improved.

A structure in which the second fusing heaters 22 and third fusing heaters 23 are provided at two locations has been described, but this is not limiting. A structure is possible in which the second fusing heaters 22 are provided at one location and the second fusing heaters 22 are moved to form fused portions at two locations.

Alternatively, the structure of the second fusing heaters 22 may be a heater structure in which the width of a fusing region is large, a fused portion with a large width may be formed at a single location, and the fused portion may be cut at the middle thereof in the up-and-down direction.

For equipment in which wired communication between the cassette 18 and an external device is required, it is desirable to remove part of the sheet at a connector region for a cable connection and carry out a separate process for hermetic sealing at the surroundings of the connector.

Other points are the same as in the first exemplary embodiment so are not described here.

### - Third Exemplary Embodiment -

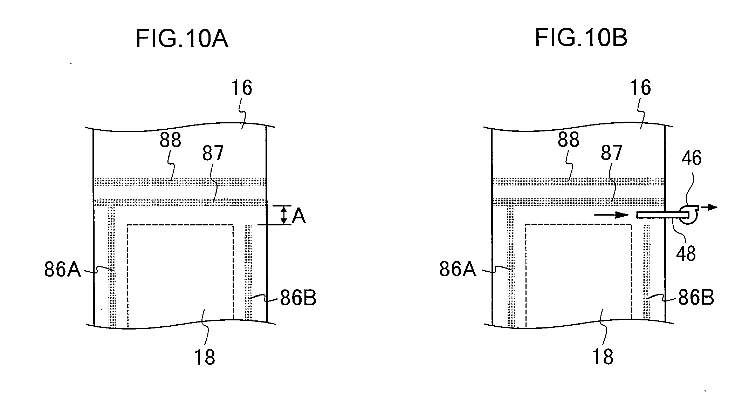

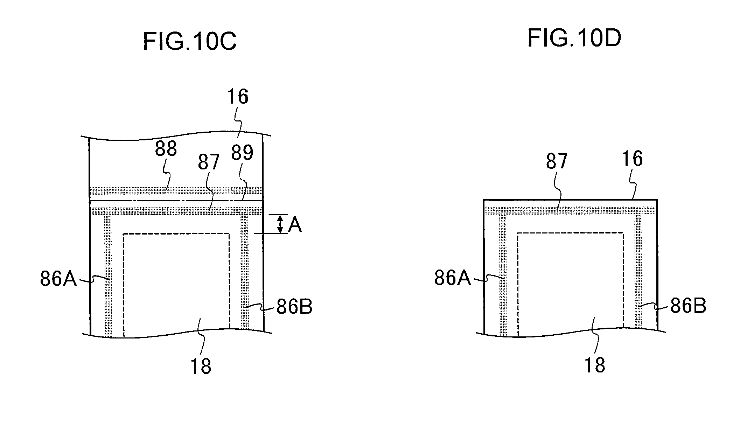

As shown in Fig. 10A to Fig. 10D, a suction fan 46 is provided in an automatic packaging device according to a third exemplary embodiment of the present invention. The suction fan 46 sucks air from inside the sheet. The provision of the suction fan 46 is a difference from the automatic packaging device 40 described in the second exemplary embodiment. This difference is the focus of description.

First, the surroundings of the cassette 18 are sealed by the first fusing heaters 21A and 21B, the second fusing heaters 22 and the third fusing heaters 23. At this time, the sheet 16 is fused with a gap with a dimension A being left between the first fusing heaters 21B and the second fusing heaters 22. The fused sheet 16 is shown in Fig. 10A. The gap with dimension A (an unfused portion) is provided between an upper end portion of the fused portion 86B and the fused portion 87.

Then, a suction duct 48 is inserted into the gap with dimension A. The suction fan 46 is connected to the suction duct 48. The suction fan 46 is driven and air inside the sealed sheet 16 is sucked out (see Fig. 10B). After the air in the bag has been sucked out, the suction duct 48 is removed from the gap with dimension A, and the gap is fused by the first fusing heaters 21B (see Fig. 10C). After the gap A has been fused, the cut portion 89 of the sheet 16 is cut by the cutter 24 (see Fig. 10C).

Thus, air in the bag is evacuated by the suction fan 46, and area contact between the sheet 16 and the surfaces of the cassette 18 may be improved. As a result, handling characteristics of the cassette 18 that has been wrapped may be improved.

Other points are the same as in the second exemplary embodiment so are not described here.

### - Fourth Exemplary Embodiment -

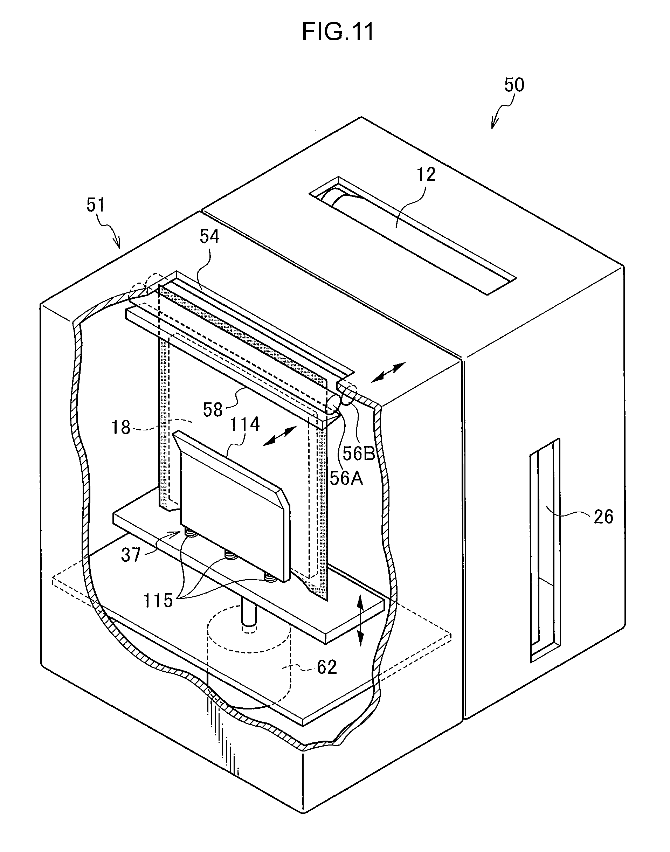

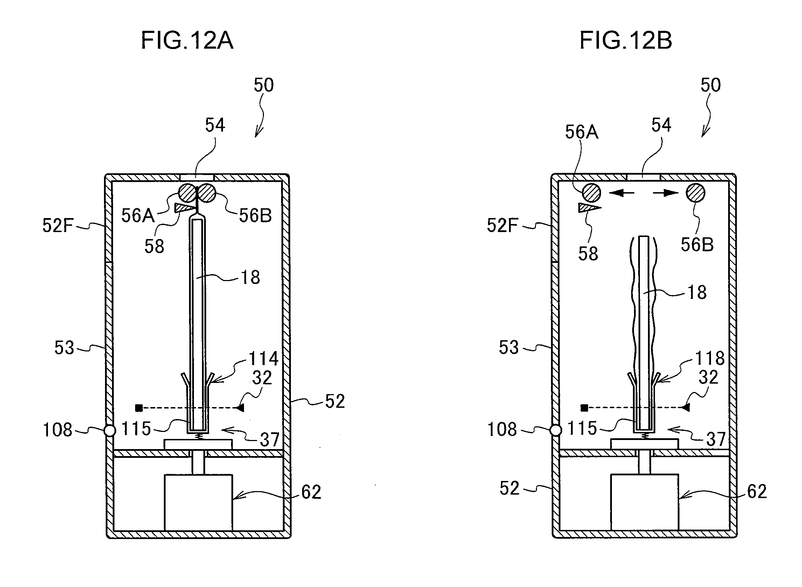

As shown in Fig. 11 and Fig. 12A to Fig. 12C, an automatic packaging device 50 in accordance with a fourth exemplary embodiment differs from the automatic packaging device 10 according to the first exemplary embodiment in that a cover removal apparatus 51 is provided, which removes the cassette 18 that has been wrapped in the sheet 16 from the sheet 16. This difference is the focus of description.

A feed portion 54 is formed in a casing 52 of the automatic packaging device 50, alongside the insertion portion 12 into which the cassette 18 is inserted. A packaged cassette 18 is inserted into the feed portion 54.

A pair of guide rollers 56A and 56B are provided below the feed portion 54, one on each side of the feed portion 54. The guide rollers 56A and 56B allow the cassette 18 to descend. A cutter 58 for cutting is provided below the guide rollers 56A and 56B.

The cassette 18 is guided by the guide rollers 56A and 56B and descends to a position at which a lower end portion of the cassette 18 abuts against a reception stand 37. The reception stand 37 includes the retention stand 114 that retains the cassette 18 and the compression coil spring 115 that absorbs vibrations when the cassette 18 descends. A solenoid 62 is provided at a lower portion of the reception stand 37. The solenoid 62 pushes the cassette 18 up to the feed portion 54.

Accordingly, the sheet 16 of the cassette 18 that has been inserted through the feed portion 54 is cut by the cutter 58 at the upper side (guide rollers 56A and 56B side) of the cassette 18, and the cassette 18 is uncovered from the sheet 16 (see Fig. 12A and Fig. 12B).

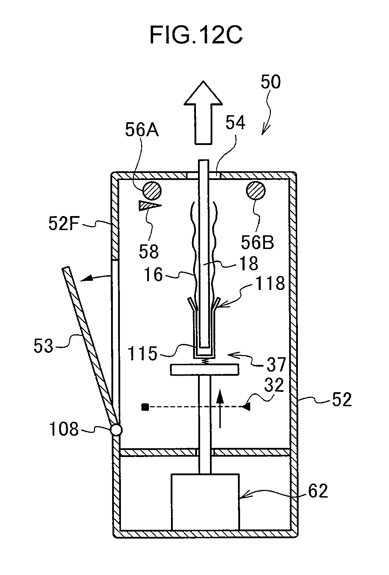

Then, after the sheet 16 has been cut, the solenoid 62 pushes the cassette 18 up. Thus, an upper portion of the cassette 18 from which the upper portion of the sheet 16 has been cut may be caused to protrude from the feed portion 54 (see Fig. 12C).

Hence, the upper portion of the cassette 18 that has been uncovered from the sheet 16 may be grasped and the cassette 18 may be pulled out from the sheet 16.

If, for example, a door for ejection 53 is provided in a front side side face 52F of the casing 52, the door for ejection 53 may be opened and the sheet 16 remaining in the casing 52 may be taken out.

Moreover, if soiling of the sheet 16 adheres to the interior of the casing 52, the door for ejection 53 may be opened and cleaning may be performed.

Other points are the same as in the first exemplary embodiment so are not described here.

### - Fifth Exemplary Embodiment -

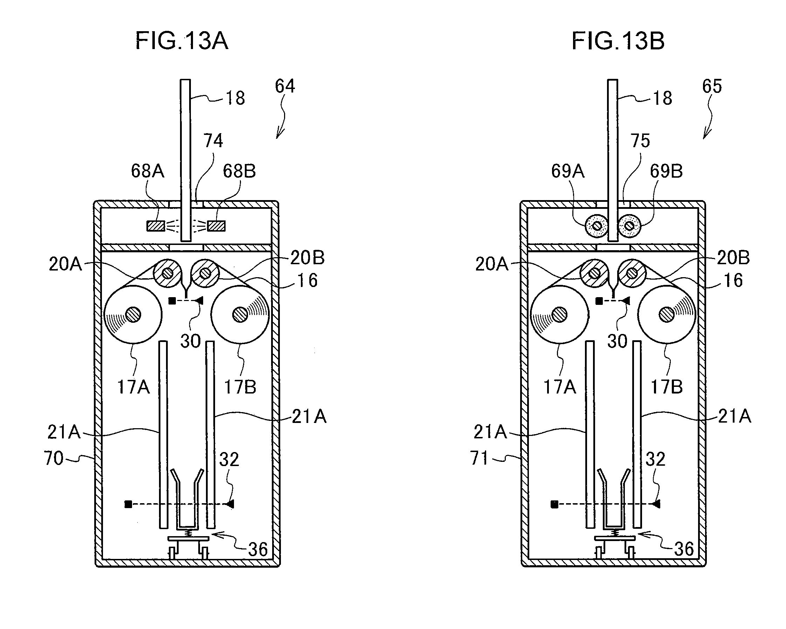

As shown in Fig. 13A, an automatic packaging device 64 in accordance with the fifth exemplary embodiment differs from the automatic packaging device 10 in that sterilizing treatment devices 68A and 68B for the cassette 18 are provided. This difference is the focus of description.

In the interior of a casing 70 of the automatic packaging device 64, the sterilizing treatment devices 68A and 68B are provided as a pair in the vicinity of an insertion portion 74, one at each side of the insertion portion 74. Herein, the sterilizing treatment devices 68A and 68B may be, for example, atomization devices that emit an antiseptic liquid (alcohol or the like) in the form of a mist. Thus, a mist of antiseptic liquid is ejected at the surfaces of the cassette 18 from both sides thereof, applying a sterilizing treatment. The guide rollers 20A and 20B described in the first exemplary embodiment are disposed below the sterilizing treatment devices 68A and 68B, and the sheet 16 is disposed at the side of the guide rollers 20A and 20B at which the insertion portion is disposed.

Thus, when the cassette 18 is inserted, a treatment sterilizing the cassette 18 may be applied by the sterilizing treatment devices 68A and 68B, and the sterilized cassette 18 may be wrapped in the sheet 16. As a result, the cassette 18 may be kept clean. Other points are the same as in the first exemplary embodiment so are not described here.

### - Sixth Exemplary Embodiment -

As shown in Fig. 13B, an automatic packaging device 65 in accordance with a sixth exemplary embodiment of the present invention differs from the automatic packaging device 10 in that cleaning devices 69A and 69B for the cassette 18 are provided. This difference is the focus of description.

The cleaning devices 69A and 69B are provided inside a casing 71 at an downstream side of an insertion portion 75. The cleaning devices 69A and 69B apply a cleaning treatment to the surfaces of the cassette 18. Herein, the cleaning devices 69A and 69B may be, for example, a pair of sponge rollers, brush rollers or the like that rotate while nipping the cassette 18 from both sides thereof. Thus, the surfaces of the cassette 18 may be cleaned by the cleaning devices 69A and 69B before the cassette 18 is packaged in the sheet 16.

The guide rollers 20A and 20B described in the first exemplary embodiment are disposed below the cleaning devices 69A and 69B, and the sheet 16 is disposed at the side of the guide rollers 20A and 20B at which the insertion portion is disposed. Thus, when the cassette 18 is inserted, a treatment cleaning the cassette 18 may be applied by the cleaning devices 69A and 69B, and the cleaned cassette 18 may be wrapped in the sheet 16. As a result, the cassette 18 may be kept clean.

Other points are the same as in the first exemplary embodiment so are not described here.

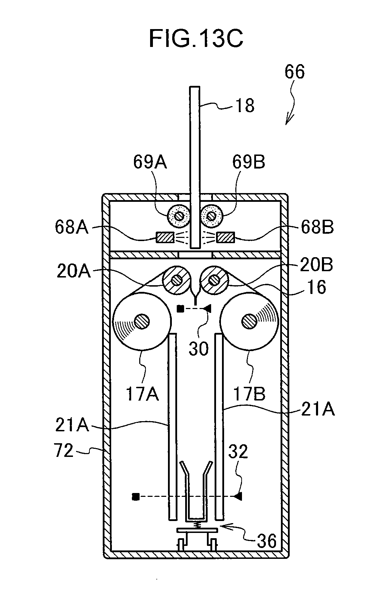

As illustrated in an automatic packaging device 66 in Fig. 13C, the cleaning devices 69A and 69B according to the present exemplary embodiment and the sterilizing treatment devices 68A and 68B described in the fifth exemplary embodiment may be combined, and the two may be used together. Thus, the surfaces of the cassette 18 may be cleaned and sterilized before the cassette 18 is packaged in the sheet 16.

### - Seventh Exemplary Embodiment -

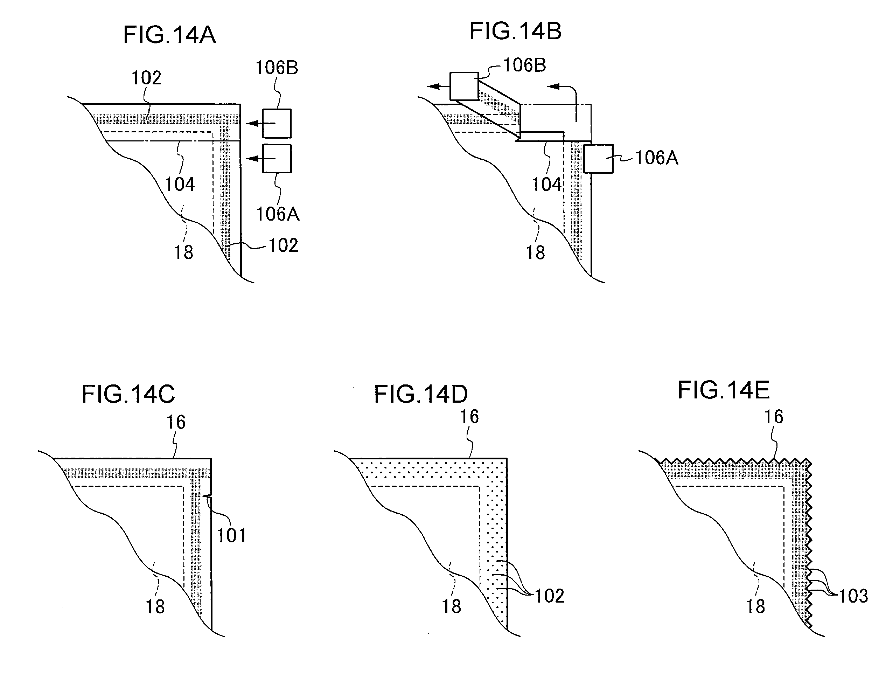

As shown in Fig. 14A to Fig. 14F, an automatic packaging device according to a seventh exemplary embodiment, which is not shown in the drawings, differs from the automatic packaging device 10 according to the third exemplary embodiment in that the sheet 16 is hermetically sealed with a weakened portion being provided at least at a portion of the outer side of the periphery of the sheet 16. This difference is the focus of description.

The automatic packaging device is equipped with a weakened portion formation function, which is not illustrated in the drawings. The automatic packaging device hermetically seals the cassette 18 in the sheet 16, forming a weakened portion at least at one location of the periphery of the sheet 16. The weakened portion includes, for example, a notch portion 101 formed in the sheet 16 (see Fig. 14C), plural perforation portions 102 that open adjacent to one another (see Fig. 14D), serrated edging 103 formed at an outer periphery portion of the sheet 16 (see Fig. 14E), or the like.

Apair of gripping portions 106A and 106B are provided inside the casing of the automatic packaging device (see Fig. 14A). The gripping portions 106A and 106B sandwich and grip the weakened portion at two locations. In the state in which the weakened portion is gripped by one gripping portion 106A, the other gripping portion 106B is moved along a rupture line 104. As a result, the sheet 16 is ruptured along the pre-specified rupture line 104 continuing from the weakened portion (see Fig. 14B).

Thus, even though the sheet 16 is in tight contact with the cassette 18, the sheet 16 may be taken off the cassette 18 without the cassette 18 being damaged.

Other points are the same as in the third exemplary embodiment so are not described here.

### - Eighth Exemplary Embodiment -

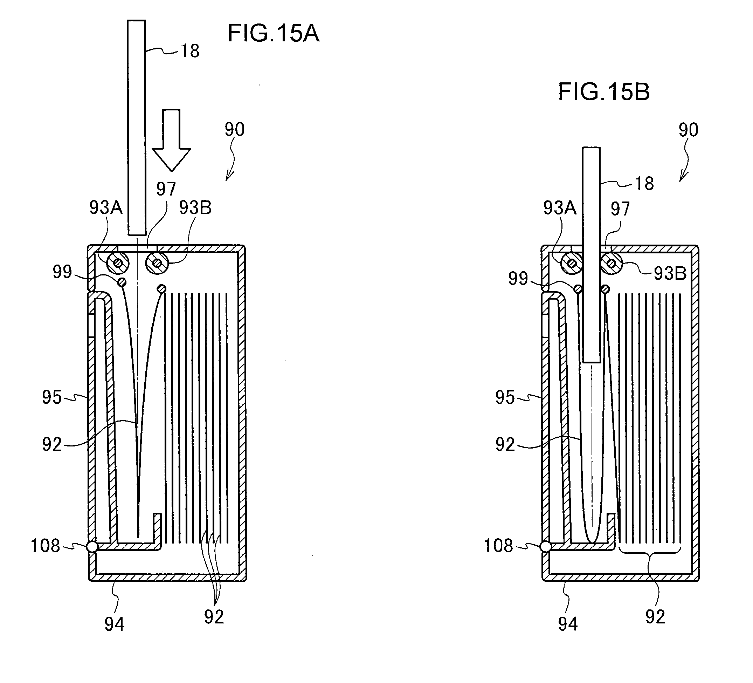

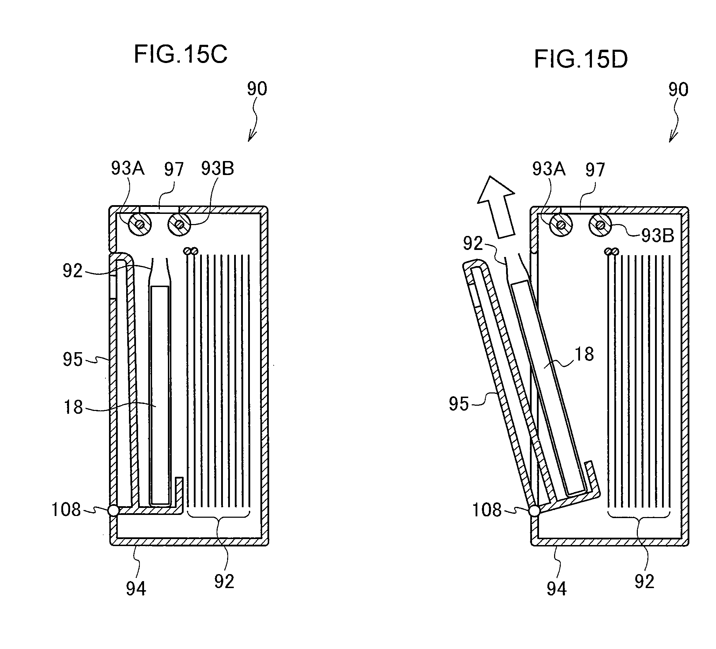

As shown in the sectional diagrams of Fig. 15A to Fig. 15D, an automatic packaging device 90 according to an eighth exemplary embodiment differs from the first exemplary embodiment in that storage bags 92 in which the sheet is formed into bag shapes are used. This difference is the focus of description.

The storage bags 92 are bags formed of a sheet fabricated of resin. The storage bags 92 are disposed inside a casing 94 with aperture portions thereof oriented upward. An insertion portion 97 is formed in an upper portion of the casing 94. Guide rollers 93A and 93B are provided one at each side of the insertion portion 97. The guide rollers 93A and 93B insert the cassette 18 using gravity. An aperture clasp 99 is provided below the guide rollers 93A and 93B. The aperture clasp 99 holds the aperture portion of one of the storage bags 92 and slides, and opens the upper portion of the storage bag 92.

It is desirable to provide a blowing fan in the vicinity of the aperture clasp 99, to keep the upper portion of the storage bag 92 assuredly opened.

An ejection door 95 for ejecting the cassette 18 is provided in a front face 94F of the casing 94. The turning support portion 108 is provided at the ejection door 95. The turning support portion 108 may be turned by a motor and the ejection door 95 opened.

Accordingly, using gravity, the cassette 18 is inserted into the storage bag 92 by the guide rollers 93A and 93B. Then the ejection door 95 is turned in a state of supporting the cassette 18, and the cassette 18 stored in the storage bag 92 may be taken out through the front face 94F of the casing 94. That is, the cassette 18 may be inserted into the storage bag 92 automatically, and the cassette 18 inserted into the storage bag 92 may be ejected.

Other points are the same as in the first exemplary embodiment so are not described here.

### - Ninth Exemplary Embodiment -

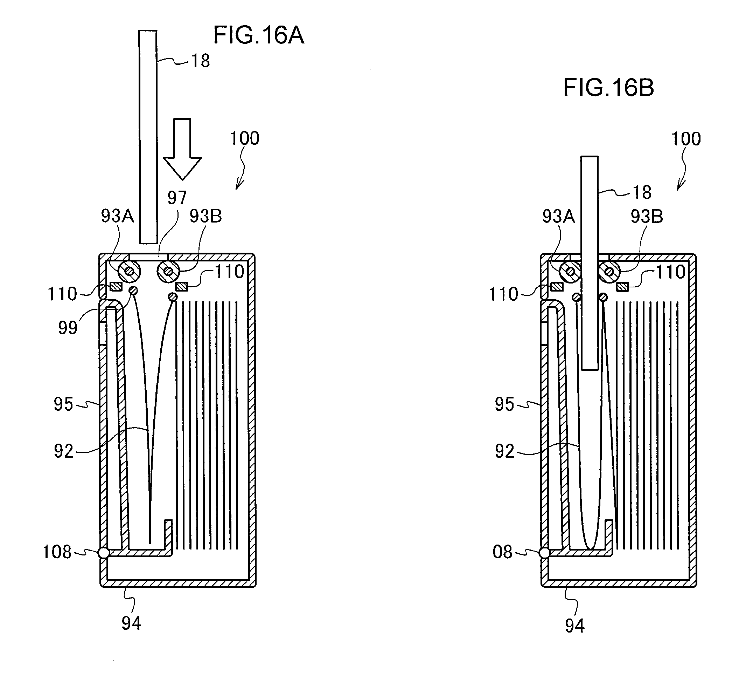

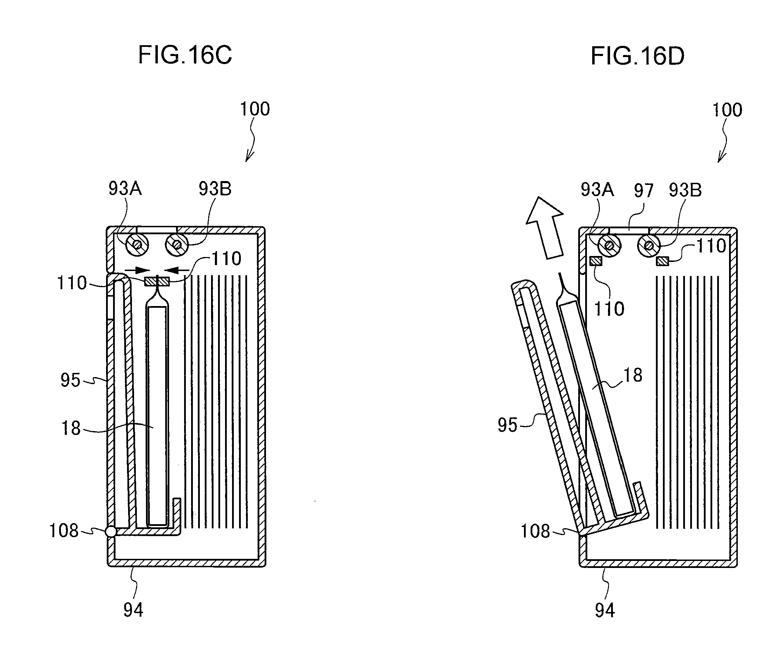

As shown in the partial sectional diagrams in Fig. 16A to Fig. 16D, an automatic packaging device 100 according to a ninth exemplary embodiment differs from the eighth exemplary embodiment in that fusing heaters 110 are provided. This difference is the focus of description.

A pair of the fusing heaters 110 are provided below the guide rollers 93A and 93B inside the casing 94 of the automatic packaging device 100. The fusing heaters 110 fuse the aperture portion at the upper portion of the storage bag 92.

Thus, after the cassette 18 is inserted into the storage bag 92, the fusing heaters 110 may be moved and the aperture portion of the storage bag 92 may be fused by the fusing heaters 110 (see Fig. 16C).

Then, after the aperture portion of the storage bag 92 has been sealed, the turning support portion 108 of the ejection door 95 may be turned by the motor and the cassette 18 may be ejected through the opening portion between the ejection door 95 and the casing 94.

Thus, the storage bag 92 may be sealed in the state in which the cassette 18 has been inserted therein, and the sealed cassette 18 may be ejected.

Other points are the same as in the eighth exemplary embodiment so are not described here.

### - Tenth Exemplary Embodiment -

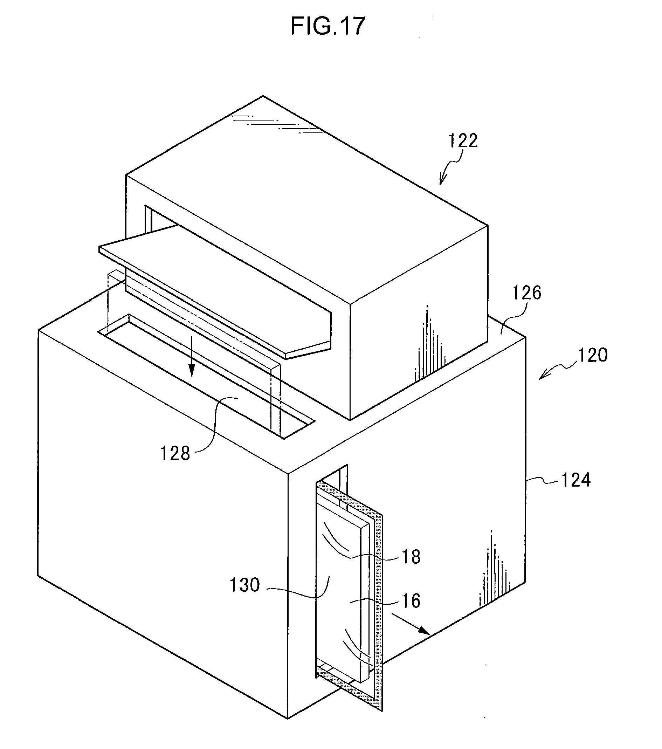

As shown in Fig. 17, a mounting portion 126 is formed in an upper portion of a casing 124 of an automatic packaging device 120 according to a tenth exemplary embodiment. An image reading device (for example, FCR PRIMA T (trademark)) 122 may be mounted at the mounting portion 126. A CR cassette is inserted into the image reading device 122 and the image reading device 122 reads an image captured by the CR cassette.

Any of the structures described in the first to ninth exemplary embodiments may be employed inside the casing 124 of the automatic packaging device 120. Thus, when the cassette 18 is inserted through the insertion portion 128, the cassette 18 may be automatically wrapped in the sheet 16 and ejected through an ejection portion 130.

Moreover, although not shown in the drawings, a sheet removal section that takes off the sheet 16 wrapping the cassette 18 may be included in the casing 124.

Thus, an upper portion of the casing of the automatic packaging device 120 may serve as a location for disposition of the image reading device 122.

In addition to the image reading device 122, an automatic developer (for example, CEPROS Q (trademark)) may be mounted in the upper portion of the casing of the automatic packaging device 120. The automatic developer develops a film on which an image has been captured in a "film-type" cassette. Thus, the upper portion of the casing of the automatic packaging device 120 may serve as a location for disposition of an automatic developer.

## Claims

1. An automatic packaging device comprising:
a casing provided with an insertion portion and ejection portion for a radiation image capture device;
a wrapping means disposed inside the casing, the wrapping means wrapping a radiation image capture device inserted through the insertion portion in a cover material; and
a conveyance means that conveys the radiation image capture device that has been wrapped in the cover material by the wrapping means to the ejection portion and enables ejection of the radiation image capture device from the casing.

2. The automatic packaging device according to claim 1, wherein
the cover material includes a sheet fabricated of resin that is stored respectively in storage portions at both sides of a movement path of the radiation image capture device inserted through the insertion portion, two distal end portions of the sheet that are drawn out from the storage portions being connected,
the wrapping means including:
guide means that are disposed at the both sides of the movement path and that cause the sheet to oppose two side faces of the radiation image capture device while the sheet is being drawn out by a leading end of the radiation image capture device moving;
a fusion means that fuses portions of the sheet at the both sides to one another at a periphery of the radiation image capture device; and
a cutting means that cuts the sheet between a portion of the sheet in which the radiation image capture device has been packaged and the storage portions,
and wherein the conveyance means includes an operation means that conveys the radiation image capture device to the ejection portion after the cutting means has cut the sheet.

3. The automatic packaging device according to claim 2, wherein
the fusion means fuses the sheet at one of a single location in a movement direction of the radiation image capture device or two locations separated by a predetermined spacing in the movement direction,
if the sheet is fused at the two locations, the cutting means cuts the sheet between the two fused locations, and
if the sheet is fused at the single location, the cutting means cuts a movement direction intermediate portion of the fused location.

4. The automatic packaging device according to claim 1, wherein
the cover material is a bag that is disposed inside the casing and formed of a sheet fabricated of resin, the bag including an aperture portion,
the wrapping means includes a guide means that inserts the radiation image capture device into the bag under gravity, and
the conveyance means includes an opening portion that opens the ejection portion for the radiation image capture device after the radiation image capture device has been inserted into the bag.

5. The automatic packaging device according to claim 4, wherein the wrapping means includes a fusion means that seals the aperture portion of the bag after the radiation image capture device has been inserted into the bag, and the opening portion opens the ejection portion for the radiation image capture device after the fusion means has fused the aperture portion of the bag.

6. The automatic packaging device according to claim 3 or claim 5, further comprising a suction means inside the casing that sucks air from inside the sheet before the radiation image capture device is hermetically sealed by the fusion means.

7. The automatic packaging device according to any one of claims 1 to 6, further comprising:
a feed portion in the casing through which a radiation image capture device wrapped in the cover material is inserted;
a guide means that lowers the radiation image capture device fed through the feed portion to a reception portion under gravity;
an uncovering means that breaks the cover material of the radiation image capture device placed on the reception portion and uncovers the radiation image capture device; and
a raising means that lifts the reception portion and conveys the radiation image capture device that has been uncovered from the cover material to the feed portion.

8. The automatic packaging device according to claim 7, wherein the uncovering means cuts the sheet along an edge of the radiation image capture device.

9. The automatic packaging device according to claim 7, wherein the wrapping means hermetically seals the cover material and provides a weakened portion at least at a portion of an outer side of the cover material, and
the uncovering means breaks the weakened portion and ruptures the cover material.

10. The automatic packaging device according to any one of claims 1 to 6, further comprising, at the insertion portion, a sterilizing treatment means that applies a sterilizing treatment to surfaces of the radiation image capture device.

11. The automatic packaging device according to any one of claims 1 to 6 and 10, further comprising, at the insertion portion, a cleaning means that applies a cleaning treatment to surfaces of the radiation image capture device.

12. The automatic packaging device according to any one of claims 1 to 6, 10 and 11, wherein a sterilizing treatment is applied to a surface of the cover material.

13. The automatic packaging device according to any one of claims 1 to 6 and 10 to 12, wherein an antistatic treatment is applied to a surface of the cover material.

14. The automatic packaging device according to any one of claims 1 to 6 and 10 to 13, wherein at least one of a slip prevention treatment or slip prevention machining that prevents slippage is applied to a surface of the cover material.

15. The automatic packaging device according to any one of claims 1 to 6 and 10 to 14, wherein the cover material is formed of a material that allows transmission of communication waves from the radiation image capture device.
